# EUROPEAN PATENT APPLICATION

(11) **EP 4 708 016 A1**
(43) Date of publication of application: **11.03.2026**
(21) Application number: 24853301.0
(22) Date of filing: 27.05.2024
(51) Int. Cl.: G06F 3/06

(54) **DATA MIGRATION METHOD AND APPARATUS BASED ON DATA STORAGE, AND SERVER AND STORAGE MEDIUM**

(30) Priority: 16.08.2023 CN 202311035593
(71) Applicant: Jingdong Technology Information Technology Co., Ltd., Beijing 100176 (CN)
(72) Inventor: LI, Junpeng, Beijing 100176 (CN); WANG, Shijie, Beijing 100176 (CN); ZOU, Hu, Beijing 100176 (CN); ZHANG, Yongfeng, Beijing 100176 (CN); ZHENG, Jing, Beijing 100176 (CN)
(74) Representative: Böckmann genannt Dallmeyer, Georg Nikolas
(86) International application number: PCT/CN2024/095418
(87) International publication number: WO 2025/035886

(57) **Abstract**

Disclosed are a data migration method and apparatus based on data storage, a server, and a storage medium, which relate to the technical field of data processing. The method comprises: after receiving a data write request, writing to-be-written data that is included in the data write request into a target storage layer (110), wherein the data write request is sent by a current client after a terminal device changes the current client from a first client to a second client; after receiving a data acquisition request and in a case where it is determined that target data corresponding to the data acquisition request does not exist in the target storage layer, acquiring the target data in a data storage cluster corresponding to the first client, and writing the target data into the target storage layer (120), wherein the data acquisition request is sent by the current client; and sending the target data to the current client (130).

## Description

### CROSS-REFERENCE TO RELATED APPLICATIONS

This application claims the priority to Chinese Patent Application No. 202311035593.0, filed on August 16, 2023, the content of which is hereby incorporated by reference in its entirety.

### TECHNICAL FIELD

The application, which relates to the technical field of data processing, relates to, for example, a data migration method and apparatus based on data storage, a server, and a storage medium.

### BACKGROUND

Data migration is an important task for data management in information construction. A common case in a storage network is moving data from a storage device at one node to a storage device at another node.

In the related art, it is required to first interrupt a service provided by a migration node, followed by a shutdown to perform data migration. The duration of the migration is related to the scale of the migrated data. After the migration is completed, a new node is activated to replace the migration node, and the interrupted service is restored.

At least the following technical problems exist in the related art:
During the data migration, a time gap exists between the activation of the new node and the interruption of the migration node, which affects user experience.

### SUMMARY

The application provides a data migration method and apparatus based on data storage, a server, and a storage medium so as to achieve a client change without perception.

According to a first aspect, the application provides a data migration method based on data storage, comprising: after receiving a data write request, writing to-be-written data that is included in the data write request into a target storage layer, wherein the data write request is sent by a current client after a terminal device changes the current client from a first client to a second client; after receiving a data acquisition request and in a case where it is determined that target data corresponding to the data acquisition request does not exist in the target storage layer, acquiring the target data in a data storage cluster corresponding to the first client, and writing the target data into the target storage layer, wherein the data acquisition request is sent by the current client; and sending the target data to the current client.

According to a second aspect, the application further provides a data migration apparatus based on data storage, comprising: a writing module configured to, after receiving a data write request, write to-be-written data that is included in the data write request into a target storage layer, wherein the data write request is sent by a current client after a terminal device changes the current client from a first client to a second client; an acquisition module configured to, after receiving a data acquisition request and in a case where it is determined that target data corresponding to the data acquisition request does not exist in the target storage layer, acquire the target data in a data storage cluster corresponding to the first client, and write the target data into the target storage layer, wherein the data acquisition request is sent by the current client; and a sending module configured to send the target data to the current client.

According to a third aspect, the application further provides a server, comprising: one or more processors; a storage means configured to store one or more programs, the one or more programs, which, when executed by the one or more processors, cause the one or more processors to perform the data migration method based on data storage as recited in the first aspect.

According to a fourth aspect, the application further provides a storage medium comprising computer-executable instructions, which, when executed by a computer processor, are used to perform the data migration method based on data storage as recited in the first aspect.

### BRIEF DESCRIPTION OF THE DRAWINGS

FIG. 1 is a flowchart of a data migration method based on data storage provided in an embodiment of the application;
FIG. 2 is a flowchart of another data migration method based on data storage provided in an embodiment of the application;
FIG. 3 is a schematic diagram of a data processing system in a data migration method based on data storage provided in an embodiment of the application;
FIG. 4 is a schematic diagram of a structure of a data migration apparatus based on data storage provided in an embodiment of the application;
FIG. 5 is a schematic diagram of a structure of a server provided in an embodiment of the application.

### DETAILED DESCRIPTION

The application is described below in combination with the figures and embodiments. The specific embodiments described herein are merely used to explain the application. To facilitate descriptions, only parts related to the application are shown in the figures.

It should be mentioned before discussing the exemplary embodiments that some of the exemplary embodiments are described as processes or methods that are depicted as flowcharts. Although the flowchart describes multiple operations (or steps) as a sequential process, many of the operations may be carried out in parallel, concurrently or simultaneously. Furthermore, the sequence of the multiple operations may be rearranged. The process may be terminated when the operations thereof are completed, but may also have additional steps that are not included in the figures. The process may correspond to a method, a function, a procedure, a subroutine, a subprogram, and so on. In addition, in a case where there is no conflict, the embodiments in the application and the features in the embodiments may be combined with each other.

The traditional data migration method generally adopts a synchronous migration method, where it is required to first interrupt a service provided by a migration node, followed by a shutdown to perform data migration. The duration of the migration is related to the scale of the migrated data. After the migration is completed, a new node is activated to replace the migration node, and the interrupted service is restored. In the traditional data migration method, during the migration, the migration node (i.e., the node to be migrated, which is a unit composed of a storage server, a hard disk, and storage service software) cannot provide a storage service, thereby causing a business interruption. In a case where business requirements become increasingly stringent, a business interruption may cause certain losses to an enterprise, and the duration required for the migration process is related to the scale of the data. When the scale of the data to be migrated is huge, the cost of the migration also correspondingly becomes unbearable.

Thus, there is an urgent need for a data migration technology that can keep applications online so to meet requirements for an uninterrupted business during the migration and a short duration of the migration.

The application proposes a data migration method based on data storage, which achieves imperceptible data migration after the running client is changed, thereby improving user experience.

The data migration method based on data storage proposed in the application will be described in detail below in combination with the figures and the embodiments.

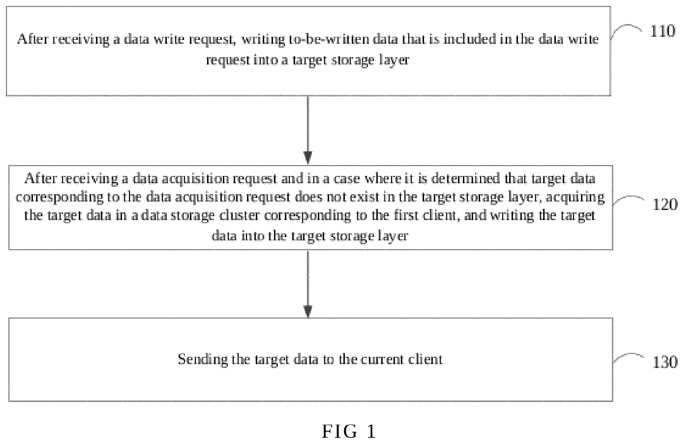

FIG. 1 is a flowchart of a data migration method based on data storage provided in an embodiment of the application. The embodiment of the application is applicable to a case where it is required to achieve a client change without perception. The method may be performed by a data migration apparatus based on data storage, and the apparatus may be implemented by software and/or hardware. As shown in FIG. 1, the method comprises the following steps:
Step 110: after receiving a data write request, writing to-be-written data that is included in the data write request into a target storage layer.

The data write request is sent by a current client after a terminal device changes the current client from a first client to a second client.

At least two clients are mounted on the terminal device, for example, a first client and a second client are mounted. When the current client running on the terminal device is the first client, data required for the running of the first client is stored in a data storage cluster, which includes a plurality of block devices.

After the terminal device executes a client switching instruction to change the current client running on the terminal device from the first client to the second client, data required for the running of the second client cannot be continued to be stored in the data storage cluster due to in-place overwrite characteristics of the block device. At this time, after receiving the data write request sent by the second client, the server may write the to-be-written data that is included in the data write request into the target storage layer, thereby achieving writing of the data required for the running of the second client.

In the embodiment of the application, after the current client running on the terminal device is changed, imperceptible data writing is achieved.

Step 120: after receiving a data acquisition request and in a case where it is determined that target data corresponding to the data acquisition request does not exist in the target storage layer, acquiring the target data in a data storage cluster corresponding to the first client, and writing the target data into the target storage layer.

The data acquisition request is sent by the current client.

After receiving the data acquisition request sent by the current client that is changed from the first client to the second client, the server may determine whether the target data corresponding to the data acquisition request exists in the target storage layer. In a case where it is determined that the target data corresponding to the data acquisition request exists in the target storage layer, the target data corresponding to the data acquisition request may be acquired in the target storage layer. In a case where it is determined that the target data corresponding to the data acquisition request does not exist in the target storage layer, the target data corresponding to the data acquisition request may be acquired in the data storage cluster corresponding to the first client. At this time, the target data corresponding to the data acquisition request may also be written into the target storage layer so as to copy the target data in the data storage cluster to the target storage layer.

The server may establish a communication connection with the data storage cluster by a proxy server, and may load an access Software Development Kit (SDK) of the data storage cluster. In a case where the server receives the data acquisition request sent by the current client that is changed from the first client to the second client, and determines that the target data corresponding to the data acquisition request does not exist in the target storage layer, it may access the data storage cluster based on the proxy server, and acquire the target data corresponding to the data acquisition request in the data storage cluster.

Step 130: sending the target data to the current client.

After the target data corresponding to the data acquisition request is acquired in the target storage layer or the data storage cluster, the target data may be sent to the current client corresponding to the data acquisition request, that is, the target data may be sent to the second client.

In the embodiment of the application, after the current client running on the terminal device is changed, imperceptible data acquisition is achieved by the proxy server.

The data migration method based on data storage provided in the embodiment of the application comprises: after receiving a data write request, writing to-be-written data that is included in the data write request into a target storage layer, wherein the data write request is sent by a current client after a terminal device changes the current client from a first client to a second client; after receiving a data acquisition request and in a case where it is determined that target data corresponding to the data acquisition request does not exist in the target storage layer, acquiring the target data in a data storage cluster corresponding to the first client, and writing the target data into the target storage layer, wherein the data acquisition request is sent by the current client; and sending the target data to the current client. According to the aforesaid technical solution, after the terminal device executes the client switching instruction to change the current client running on the terminal device from the first client to the second client, the server may write the to-be-written data that is included in the received data write request sent by the second client into the target storage layer, thereby achieving imperceptible data writing. In a case where it is determined that the target data corresponding to the received data acquisition request sent by the second client exists in the target storage layer, the target data corresponding to the data acquisition request is acquired in the target storage layer. In a case where it is determined that the target data corresponding to the received data acquisition request sent by the second client does not exist in the target storage layer, the target data corresponding to the data acquisition request is acquired in the data storage cluster corresponding to the first client based on the proxy server. At this time, the target data corresponding to the data acquisition request may also be written into the target storage layer so as to copy the target data in the data storage cluster to the target storage layer. Then, the target data corresponding to the data acquisition request acquired in the target storage layer or the data storage cluster may be sent to the current client corresponding to the data acquisition request. Imperceptible data acquisition is achieved by the proxy server. After the current client running on the terminal device is changed, imperceptible data migration is achieved, thereby improving user experience.

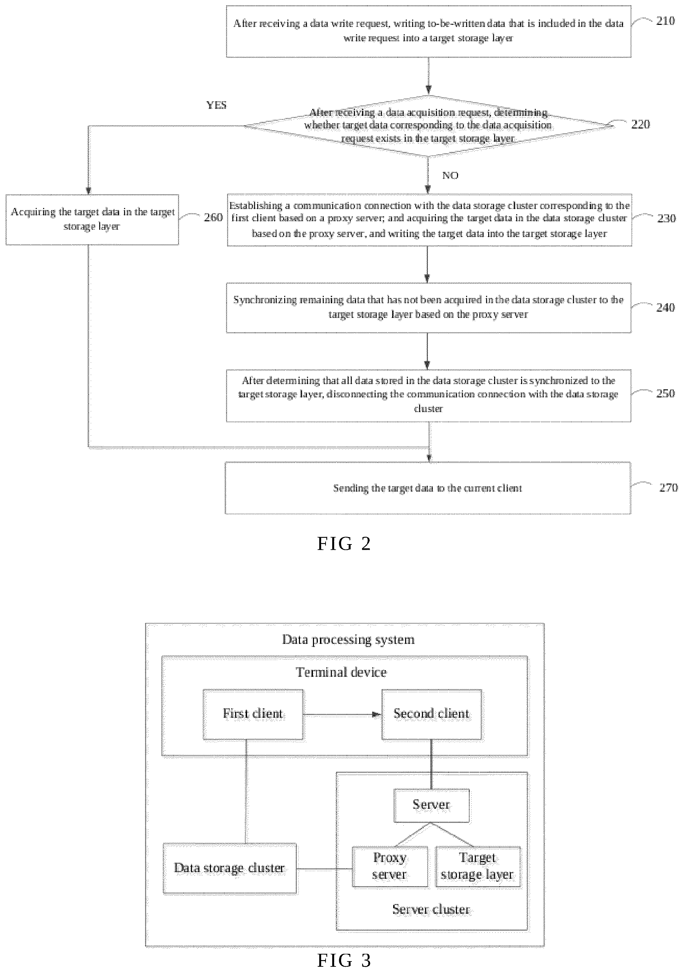

FIG. 2 is a flowchart of another data migration method based on data storage provided in an embodiment of the application. The embodiment of the application is applicable to a case where it is required to achieve a client change without perception. On the basis of the aforesaid embodiment, the embodiment of the application adds the following: "in a case where it is determined that the target data exists in the target storage layer, acquiring the target data in the target storage layer", "synchronizing remaining data that has not been acquired in the data storage cluster to the target storage layer based on the proxy server" and "after determining that all data stored in the data storage cluster is synchronized to the target storage layer, disconnecting the communication connection with the data storage cluster". The explanations of the terms the same as or corresponding to those in the aforesaid embodiment are not repeated herein. Referring to FIG. 2, the data migration method based on data storage provided in the embodiment of the application comprises:
Step 210: after receiving a data write request, writing to-be-written data that is included in the data write request into a target storage layer.

The data write request is sent by a current client after a terminal device changes the current client from a first client to a second client.

FIG. 3 is a schematic diagram of a data processing system in a data migration method based on data storage provided in an embodiment of the application. As shown in FIG. 3, the data processing system comprises a terminal device, a data storage cluster, and a server cluster. The terminal device is mounted with a first client and a second client. The data storage cluster includes a plurality of block devices. The server cluster includes a server, a proxy server, and a target storage layer. The first client mounted on the terminal device may be a ceph client, the second client may be a cloud disk client, the data storage cluster may be a ceph cluster, a server in the server cluster may be an Input/Output (IO) server, the proxy server may be a Lazy IO proxy server, and the target storage layer may be a storage engine layer.

When the current client running on the terminal device is the ceph client, the data required for the running of the ceph client is stored in the plurality of block devices in the ceph cluster.

After the terminal device executes the client switching instruction to change the current client running on the terminal device from the ceph client to the cloud disk client, data required for the running of the cloud disk client cannot be continued to be stored in the ceph cluster due to the in-place overwrite characteristics of the block device. At this time, after receiving the data write request sent by the cloud disk client, the IO server may write the to-be-written data that is included in the data write request into the storage engine layer, thereby achieving writing of the data required for the running of the cloud disk client.

In one embodiment, the step of writing to-be-written data that is included in the data write request into a target storage layer comprises: writing the to-be-written data into a cloud disk instance in accordance with a data identifier in the to-be-written data that is included in the data write request; and writing the to-be-written data that is written into the cloud disk instance into the target storage layer in accordance with the data identifier of the to-be-written data.

The IO server is initialized with a plurality of cloud disk instances. After receiving the data write request, the IO server may first write the to-be-written data into the cloud disk instance in accordance with the data identifier in the to-be-written data that is included in the data write request, and then write the to-be-written data that is written into the cloud disk instance into the storage engine layer in accordance with the data identifier of the to-be-written data, thereby achieving imperceptible data writing. The to-be-written data is written into the cloud disk instance and then into the storage engine layer, so that after receiving the data acquisition request, the IO server may determine whether the target data corresponding to the data acquisition request is stored in the storage engine layer in accordance with the data stored in the cloud disk instance, thereby making data acquisition more imperceptible.

In the embodiment of the application, after the current client running on the terminal device is changed, imperceptible data writing is achieved.

Step 220: after receiving a data acquisition request, determining whether target data corresponding to the data acquisition request exists in the target storage layer.

The data acquisition request is sent by the current client.

After receiving the data acquisition request sent by the current client that is changed from the ceph client to the cloud disk client, the IO server may determine whether the target data corresponding to the data acquisition request exists in the storage engine layer, and may determine whether the target data corresponding to the data acquisition request is stored in the storage engine layer in accordance with the data stored in the cloud disk instance, thereby making data acquisition more imperceptible.

In a case where it is determined that the target data corresponding to the data acquisition request does not exist in the target storage layer, step 230 is performed; in a case where it is determined that the target data corresponding to the data acquisition request exists in the target storage layer, step 260 is performed.

In the embodiment of the application, achieving determination of whether the target data corresponding to the data acquisition request exists in the target storage layer after receiving the data acquisition request provides a data basis for acquiring the target data corresponding to the data acquisition request.

Step 230: establishing a communication connection with the data storage cluster corresponding to the first client based on a proxy server; and acquiring the target data in the data storage cluster based on the proxy server, and writing the target data into the target storage layer.

The IO server may establish a communication connection with the ceph cluster corresponding to the ceph client based on the Lazy IO proxy server, and may load a Ceph Client SDK corresponding to the ceph cluster. Then, the IO server may access the ceph cluster corresponding to the ceph client based on the Lazy IO proxy server so as to acquire the target data corresponding to the data acquisition request in the ceph cluster corresponding to the ceph client. At this time, the target data corresponding to the data acquisition request may also be written into the storage engine layer so as to copy the target data in the ceph cluster to the storage engine layer. The target data may be first written into the cloud disk instance, and then the target data that is written into the cloud disk instance is written into the storage engine layer. As mentioned above, the target data is written into the cloud disk instance and then into the storage engine layer, so that after receiving the data acquisition request, the IO server may determine whether the target data corresponding to the data acquisition request is stored in the storage engine layer in accordance with the data stored in the cloud disk instance, thereby making data acquisition more imperceptible.

In the embodiment of the application, in a case where it is determined that the target data corresponding to the data acquisition request does not exist in the target storage layer, acquisition of the target data corresponding to the data acquisition request in the data storage cluster corresponding to the first client is achieved based on the proxy server, and writing of the target data into the target storage layer is achieved at the same time.

Step 240: synchronizing remaining data that has not been acquired in the data storage cluster to the target storage layer based on the proxy server.

In one embodiment, step 240 may comprise: writing the remaining data that has not been acquired in the data storage cluster into a cloud disk instance based on the proxy server; and writing the remaining data that is written into the cloud disk instance into the target storage layer.

After acquiring the target data in accordance with the data acquisition request, the server may also write the target data into the storage engine layer to achieve copying of the target data to the storage engine layer. The remaining data that has not been acquired in the ceph cluster has not yet been copied to the storage engine layer, so the remaining data that has not been acquired in the ceph cluster may be synchronized to the storage engine layer based on the proxy server to achieve copying of all data stored in the ceph cluster to the storage engine layer, which facilitates smoother running of the cloud disk client and makes data acquisition by the cloud disk client more imperceptible.

The remaining data that has not been acquired in the ceph cluster may be first written into the cloud disk instance based on the proxy server, and then the remaining data that is written into the cloud disk instance is written into the storage engine layer. As mentioned above, the remaining data is written into the cloud disk instance and then into the storage engine layer, so that after receiving the data acquisition request, the IO server may determine whether the target data corresponding to the data acquisition request is stored in the storage engine layer in accordance with the data stored in the cloud disk instance, thereby making data acquisition more imperceptible.

In the embodiment of the application, writing of the remaining data that has not been acquired in the data storage cluster into the target storage layer is achieved based on the proxy server, and copying of all data stored in the data storage cluster to the target storage layer is achieved.

Step 250: after determining that all data stored in the data storage cluster is synchronized to the target storage layer, disconnecting the communication connection with the data storage cluster.

After it is determined that all data stored in the ceph cluster is synchronized to the storage engine layer, the communication connection between the IO server and the ceph cluster may be disconnected, and the Lazy IO proxy server may be made to release the Ceph Client SDK corresponding to the ceph cluster.

After step 250, step 270 is performed.

Step 260: acquiring the target data in the target storage layer.

After receiving the data acquisition request sent by the current client that is changed from the ceph client to the cloud disk client, the IO server may determine whether the target data corresponding to the data acquisition request exists in the storage engine layer, and may acquire the target data corresponding to the data acquisition request in the storage engine layer in a case where it is determined that the target data corresponding to the data acquisition request exists in the storage engine layer.

In the embodiment of the application, in a case where it is determined that the target data corresponding to the data acquisition request exists in the target storage layer, acquisition of the target data corresponding to the data acquisition request in the target storage layer is achieved.

Step 270: sending the target data to the current client.

After the target data corresponding to the data acquisition request is acquired in the storage engine layer or the ceph cluster, the target data may be sent to the current client corresponding to the data acquisition request, that is, the target data may be sent to the cloud disk client.

In the embodiment of the application, after the current client running on the terminal device is changed, imperceptible data acquisition is achieved by the proxy server.

The data migration method based on data storage provided in the embodiment of the application comprises: after receiving a data write request, writing to-be-written data that is included in the data write request into a target storage layer; after receiving a data acquisition request, determining whether target data corresponding to the data acquisition request exists in the target storage layer; in a case where it is determined that target data corresponding to the data acquisition request does not exist in the target storage layer, establishing a communication connection with the data storage cluster corresponding to the first client based on a proxy server, acquiring the target data in the data storage cluster based on the proxy server, writing the target data into the target storage layer, synchronizing remaining data that has not been acquired in the data storage cluster to the target storage layer based on the proxy server, and after determining that all data stored in the data storage cluster is synchronized to the target storage layer, disconnecting the communication connection with the data storage cluster; in a case where it is determined that target data corresponding to the data acquisition request exists in the target storage layer, acquiring the target data in the target storage layer; and sending the target data to the current client. According to the aforesaid technical solution, after the terminal device executes the client switching instruction to change the current client running on the terminal device from the first client to the second client, the server may write the to-be-written data that is included in the received data write request sent by the second client into the target storage layer, thereby achieving imperceptible data writing. In a case where it is determined that the target data corresponding to the received data acquisition request sent by the second client exists in the target storage layer, the target data corresponding to the data acquisition request is acquired in the target storage layer. In a case where it is determined that the target data corresponding to the received data acquisition request sent by the second client does not exist in the target storage layer, the target data corresponding to the data acquisition request is acquired in the data storage cluster corresponding to the first client based on the proxy server. At this time, the target data corresponding to the data acquisition request may also be written into the target storage layer so as to copy the target data in the data storage cluster to the target storage layer. Then, the target data corresponding to the data acquisition request acquired in the target storage layer or the data storage cluster may be sent to the current client corresponding to the data acquisition request. Imperceptible data acquisition is achieved by the proxy server. Certainly, the remaining data that has not been acquired in the data storage cluster may also be written into the target storage layer based on the proxy server to achieve copying of all data stored in the data storage cluster to the target storage layer. After it is determined that all data stored in the data storage cluster is synchronized to the target storage layer, the communication connection with the data storage cluster is disconnected. After the current client running on the terminal device is changed, imperceptible data migration is achieved, thereby improving user experience.

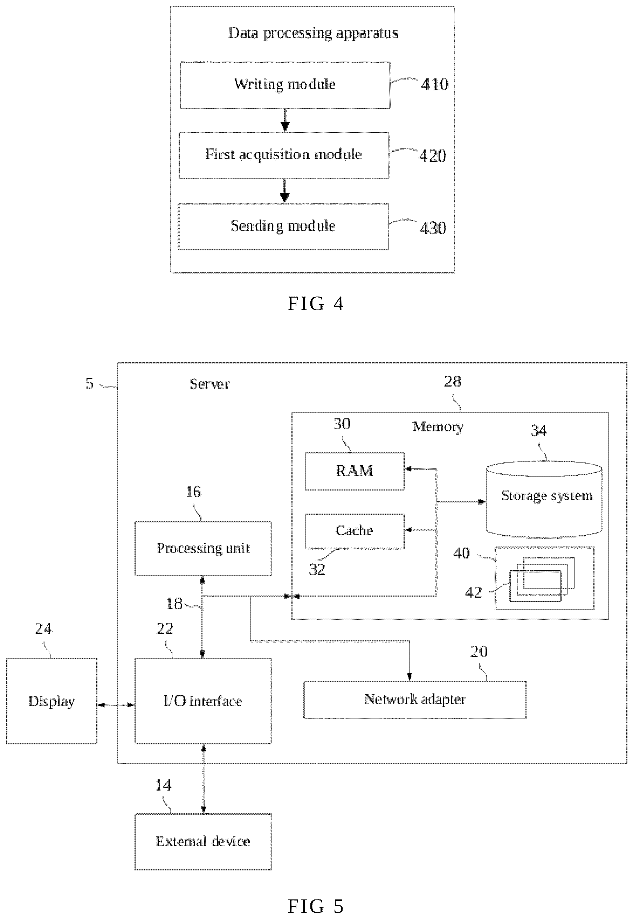

FIG. 4 is a schematic diagram of a structure of a data migration apparatus based on data storage provided in an embodiment of the application. The apparatus and the data migration method based on data storage in the aforesaid embodiment belong to the same concept. For details that are not described in detail in the embodiment of the data migration apparatus based on data storage, reference may be made to the aforesaid embodiment of the data migration method based on data storage.

The structure of the data migration apparatus based on data storage, as shown in FIG. 4, comprises: a writing module 410 configured to, after receiving a data write request, write to-be-written data that is included in the data write request into a target storage layer, wherein the data write request is sent by a current client after a terminal device changes the current client from a first client to a second client; a first acquisition module 420 configured to, after receiving a data acquisition request and in a case where it is determined that target data corresponding to the data acquisition request does not exist in the target storage layer, acquire the target data in a data storage cluster corresponding to the first client, and write the target data into the target storage layer, wherein the data acquisition request is sent by the current client; and a sending module 430 configured to send the target data to the current client.

On the basis of the aforesaid embodiment, the writing module 410 is configured to, after receiving the data write request, write the to-be-written data into a cloud disk instance in accordance with a data identifier in the to-be-written data that is included in the data write request; and write the to-be-written data that is written into the cloud disk instance into the target storage layer in accordance with the data identifier of the to-be-written data.

On the basis of the aforesaid embodiment, the apparatus further comprises a second acquisition module configured to, after receiving the data acquisition request and in a case where it is determined that the target data exists in the target storage layer, acquire the target data in the target storage layer.

On the basis of the aforesaid embodiment, the first acquisition module 420 is configured to, after receiving the data acquisition request and in a case where it is determined that the target data corresponding to the data acquisition request does not exist in the target storage layer, establish a communication connection with the data storage cluster based on a proxy server; and acquire the target data in the data storage cluster based on the proxy server.

On the basis of the aforesaid embodiment, the apparatus further comprises a synchronization module configured to synchronize remaining data that has not been acquired in the data storage cluster to the target storage layer based on the proxy server.

On the basis of the aforesaid embodiment, the synchronization module is configured to write the remaining data that has not been acquired in the data storage cluster into a cloud disk instance based on the proxy server; and write the remaining data that is written into the cloud disk instance into the target storage layer.

On the basis of the aforesaid embodiment, the apparatus further comprises a disconnecting module configured to, after determining that all data stored in the data storage cluster is synchronized to the target storage layer, disconnect the communication connection with the data storage cluster.

The data migration apparatus based on data storage provided in the embodiment of the application, which may perform the data migration method based on data storage provided in any embodiment of the application, has corresponding functional modules for performing the data migration method based on data storage and achieves corresponding effects.

In the aforesaid embodiment of the data migration apparatus based on data storage, the plurality of units and modules included are only divided according to functional logic, but are not limited to the aforesaid division as long as the corresponding functions may be achieved; in addition, the names of the plurality of functional units are only used to facilitate distinguishing from each other, and are not used to limit the scope of protection of the application.

FIG. 5 is a schematic diagram of a structure of a server provided in an embodiment of the application. FIG. 5 shows a block diagram of an exemplary server 5 suitable for implementing the embodiment of the application. The server 5 shown in FIG. 5 is merely an example and should not limit the functions and scope of use of the embodiment of the application.

As shown in FIG. 5, the server 5 is embodied in the form of a general-purpose computing electronic device. Components of the server 5 may include: one or more processors or processing units 16, a system memory 28, and a bus 18 connecting various system components (including the system memory 28 and the processing unit 16).

The bus 18 represents one or more of several types of bus structures, including a memory bus or a memory controller, a peripheral bus, an accelerated graphics port, and a processor or a local bus using any of multiple bus structures. For example, these architectures include an Industry Standard Architecture (ISA) bus, a Micro Channel Architecture (MAC) bus, an enhanced ISA bus, a Video Electronics Standards Association (VESA) local bus, and a Peripheral Component Interconnect (PCI) bus.

The server 5 includes multiple computer system readable media. These media may be any available media that can be accessed by the server 5, including volatile and non-volatile media as well as removable and non-removable media.

The system memory 28 may include a computer system readable medium in the form of a volatile memory, such as a Random Access Memory (RAM) 30 and/or a cache memory 32. The server 5 may include other removable/non-removable, volatile/non-volatile computer system storage media. As an example only, the storage system 34 may be configured to read from and write to a non-removable, non-volatile magnetic medium (not shown in FIG. 5, and generally referred to as a "hard drive"). Although not shown in FIG. 5, a magnetic disk drive configured to read from and write to a removable, non-volatile magnetic disk (such as a "soft disk") and an optical disk drive configured to read from and write to a removable, non-volatile optical disk (such as a Compact Disc Read-Only Memory (CD-ROM), a Digital Video Disc Read-Only Memory (DVD-ROM), or other optical media) may be provided. In these cases, each drive may be connected to the bus 18 through one or more data medium interfaces. The system memory 28 may include at least one program product, which has a set (such as at least one) of program modules configured to perform the functions of the embodiment of the application.

A program/utility 40 having a set (at least one) of program modules 42 may be stored in, for example, the system memory 28, and such program module 42 includes an operation system, one or more application programs, other program modules, and program data, each or a combination of which may include an implementation of a network environment. The program module 42 generally performs the functions and/or methods described in the embodiment of the application.

The server 5 may also communicate with one or more external devices 14 (such as a keyboard, a pointing device, a display 24, etc.), with one or more devices that enable a user to interact with the server 5, and/or with any device that enables the server 5 to communicate with one or more other computing devices (such as a network card, a modem, etc.). Such communication may be performed through an input/output (I/O) interface 22. Furthermore, the server 5 may also communicate with one or more networks (such as a Local Area Network (LAN), a Wide Area Network (WAN) and/or a public network, such as the Internet) through a network adapter 20. As shown in FIG. 5, the network adapter 20 communicates with other modules of the server 5 through the bus 18. Although not shown in FIG. 5, other hardware and/or software modules, including: a microcode, a device drive, a redundant processing unit, an external disk drive array, a Redundant Array of Independent Disks (RAID) system, a tape drive, a data backup storage system, and so on, may be used in combination with the server 5

The processing unit 16 executes multiple functional applications and page displays by running programs stored in the system memory 28, such as implementing the data migration method based on data storage provided in the embodiment of the application, the method comprising: after receiving a data write request, writing to-be-written data that is included in the data write request into a target storage layer, wherein the data write request is sent by a current client after a terminal device changes the current client from a first client to a second client; after receiving a data acquisition request and in a case where it is determined that target data corresponding to the data acquisition request does not exist in the target storage layer, acquiring the target data in a data storage cluster corresponding to the first client, and writing the target data into the target storage layer, wherein the data acquisition request is sent by the current client; and sending the target data to the current client.

Those skilled in the art may understand that the processor may also implement the technical solution of the data migration method based on data storage provided in any embodiment of the application.

The embodiment of the application provides a computer-readable storage medium having a computer program stored thereon, which when executed by a processor, implements, for example, the data migration method based on data storage provided in the embodiment of the application, the method comprising: after receiving a data write request, writing to-be-written data that is included in the data write request into a target storage layer, wherein the data write request is sent by a current client after a terminal device changes the current client from a first client to a second client; after receiving a data acquisition request and in a case where it is determined that target data corresponding to the data acquisition request does not exist in the target storage layer, acquiring the target data in a data storage cluster corresponding to the first client, and writing the target data into the target storage layer, wherein the data acquisition request is sent by the current client; and sending the target data to the current client.

The computer storage medium of the embodiment of the application may adopt any combination of one or more computer-readable media. The computer-readable medium may be a computer-readable signal medium or a computer-readable storage medium. The computer-readable storage medium may be, for example, an electronic, magnetic, optical, electromagnetic, infrared, or semiconductor system, apparatus, or device, or any combination thereof. Examples (a non-exhaustive list) of the computer-readable storage medium include: an electrical connection with one or more wires, a portable computer disk, a hard disk, a RAM, a ROM, an Erasable Programmable Read Only Memory (EPROM or flash memory), an optical fiber, a CD-ROM, an optical storage device, a magnetic storage device, or any suitable combination thereof. In the document, the computer-readable storage medium may be any tangible medium containing or storing a program, and the program may be used by or in combination with an instruction execution system, apparatus, or device.

The computer-readable signal medium may include a data signal propagated in a baseband or propagated as a part of a carrier wave, in which a computer-readable program code is carried. Such propagated data signal may adopt multiple forms, including electromagnetic signals, optical signals, or any suitable combination thereof. The computer-readable signal medium may also be any computer-readable medium other than the computer-readable storage medium, and the computer-readable medium may send, propagate or transmit a program used by or in combination with the instruction execution system, apparatus, or device.

The program code contained on the computer-readable medium may be transmitted using any appropriate medium, including: wireless, wire, optical cable, Radio Frequency (RF), and so on, or any suitable combination thereof.

Computer program codes for performing operations of the application may be written in one or more programming languages, including object-oriented programming languages such as Java, Smalltalk, and C++, and further including conventional procedural programming languages such as the "C" language or similar programming languages, or a combination thereof. The program codes may be executed entirely on a client computer, partly on the client computer, as an independent software package, partly on the client computer and partly on a remote computer, or entirely on the remote computer or a server. In a case where a remote computer is involved, the remote computer may be connected to the client computer through any type of network, including a LAN or a WAN, or may be connected to an external computer (such as being connected through the Internet using an Internet service provider).

Those skilled in the art should understand that the aforesaid plurality of modules or steps of the application, which may be implemented using a general-purpose computing apparatus, may be concentrated on a single computing apparatus or distributed on a network composed of a plurality of computing apparatuses. Optionally, the modules or steps may be implemented using program codes executable by a computer apparatus, so that they may be stored in a storage means and executed by the computing apparatus. Alternatively, the modules or steps are fabricated as a plurality of integrated circuit modules, respectively, or several modules or steps thereof are fabricated as a single integrated circuit module for implementation. Thus, the application is not limited to any specific combination of hardware and software.

## Claims

1. A data migration method based on data storage, comprising:
after receiving a data write request, writing to-be-written data that is included in the data write request into a target storage layer, wherein the data write request is sent by a current client after a terminal device changes the current client from a first client to a second client;
after receiving a data acquisition request and in a case where it is determined that target data corresponding to the data acquisition request does not exist in the target storage layer, acquiring the target data in a data storage cluster corresponding to the first client, and writing the target data into the target storage layer, wherein the data acquisition request is sent by the current client; and
sending the target data to the current client.

2. The data migration method based on data storage according to claim 1, wherein the writing the to-be-written data that is included in the data write request into the target storage layer comprises:
writing the to-be-written data into a cloud disk instance in accordance with a data identifier in the to-be-written data that is included in the data write request; and
writing the to-be-written data that is written into the cloud disk instance into the target storage layer in accordance with the data identifier of the to-be-written data.

3. The data migration method based on data storage according to claim 1, after receiving the data acquisition request, further comprising:
in a case where it is determined that the target data exists in the target storage layer, acquiring the target data in the target storage layer.

4. The data migration method based on data storage according to claim 1, wherein the acquiring the target data in the data storage cluster corresponding to the first client comprises:
establishing a communication connection with the data storage cluster based on a proxy server; and
acquiring the target data in the data storage cluster based on the proxy server.

5. The data migration method based on data storage according to claim 4, further comprising:
synchronizing remaining data that has not been acquired in the data storage cluster to the target storage layer based on the proxy server.

6. The data migration method based on data storage according to claim 5, wherein the synchronizing the remaining data that has not been acquired in the data storage cluster to the target storage layer based on the proxy server comprises:
writing the remaining data that has not been acquired in the data storage cluster into the cloud disk instance based on the proxy server; and
writing the remaining data that is written into the cloud disk instance into the target storage layer.

7. The data migration method based on data storage according to claim 4, further comprising:
after determining that all data stored in the data storage cluster is synchronized to the target storage layer, disconnecting the communication connection with the data storage cluster.

8. A data migration apparatus based on data storage, comprising:
a writing module configured to, after receiving a data write request, write to-be-written data that is included in the data write request into a target storage layer, wherein the data write request is sent by a current client after a terminal device changes the current client from a first client to a second client;
a first acquisition module configured to, after receiving a data acquisition request and in a case where it is determined that target data corresponding to the data acquisition request does not exist in the target storage layer, acquire the target data in a data storage cluster corresponding to the first client, and write the target data into the target storage layer, wherein the data acquisition request is sent by the current client; and
a sending module configured to send the target data to the current client.

9. A server, comprising:
at least one processor;
a storage means configured to store at least one program,
the at least one program, which when executed by the at least one processor, causes the at least one processor to perform the data migration method based on data storage according to any of claims 1-7.

10. A storage medium comprising computer-executable instructions, which when executed by a computer processor, cause the computer processor to perform the data migration method based on data storage according to any of claims 1-7.
